# EUROPEAN PATENT APPLICATION

(11) **EP 2 159 618 A1**
(43) Date of publication of application: **03.03.2010**
(21) Application number: 09168719.4
(22) Date of filing: 26.08.2009
(51) Int. Cl.: G02B 6/44

(54) **Optical Fiber Assemblies For Fiber to the Subscriber Applications**

(30) Priority: 27.08.2008 US 229810
(71) Applicant: Corning Cable Systems LLC, Hickory, NC 28601 (US)
(72) Inventor: Lochkovic, Gregory A., Conover, NC 28613 (US); Ott, Michael J., La Sueur, MN 56058 (US); Serrano, Jorge R., Hickory, NC 28601 (US); Knecht, Dennis M., Hickory, NC 28601 (US)
(74) Representative: Epping, Wilhelm

(57) **Abstract**

Disclosed are spools, fiber optic assemblies, and methods for use with a lashing machine or other suitable deployment for routing the fiber optic cable toward the subscriber allowing the craft to quickly and easily deploy the fiber optic cable in the field. The fiber optic assemblies may include a spool, at least one fiber optic cable disposed on the spool, and a fiber optic connector. In one embodiment, the spool includes a first spool flange and a second spool flange that include notches that overlap at angular positions for allowing the spooling of fiber optic cable off the same. In another embodiment, the fiber optic connector is attached to the spool for plug and play connectivity of the spool. In other embodiments, a splitter may be attached to the spool for splitting the optical signal.

## Description

### Background of the Invention

### Field of the Invention

Disclosed are components, optical fiber assemblies, and methods useful for fiber to the subscriber and other applications. More particularly, the disclosure relates to spools and optical fiber assemblies having fiber optic cables disposed on relatively small spools that may interface with other components for deployment.

### Technical Background

Communications networks are used to transport a variety of signals such as voice, video, data and the like. As communications applications required greater bandwidth, communication networks switched to cables having optical fibers since they are capable of transmitting an extremely large amount of bandwidth compared with a copper conductor. Moreover, a fiber optic cable is much smaller and lighter compared with a copper cable having the same bandwidth capacity. As optical waveguides are deployed deeper into communication networks, subscribers will have access to increased bandwidth. However, there are challenges for installing optical fiber networks.

For instance, as the optical communication network pushes toward subscribers, a quick and reliable installation solution is required for routing optical fibers toward the subscriber. Conventional commercial drop cable solutions use a robust fiber optic cable having one or more strength members such as glass-reinforced plastic (GRP) rods. The GRP rods provide tensile strength, inhibit buckling, and provide a robust configuration, but they also produce a relatively stiff cable. The present invention addresses the need for fiber optic assemblies that provide a quick and reliable installation for routing optical fibers toward the subscriber, while still being acceptable to the craft for preserving optical and mechanical performance.

### Summary

The disclosure is directed to components, fiber optic assemblies, and/or methods that allow quick, easy, and reliable installation for optical networks. One aspect is directed to a spool for deploying a fiber optic cable in the field using a lashing machine or similar tool. The spool includes a first spool flange and a second spool flange. The first spool flange includes a notch and the second spool flange includes a notch, wherein the notch of the first flange overlaps with the notch of the second flange over a predetermined angular location. In further embodiments, the spool can have at least one optical fiber connector and/or splitter attached thereto. Consequently, the spool may make an optical connection when attached to an enclosure or other suitable device having a complementary mating feature.

Additionally, the spool can form a portion of a larger fiber optic assembly. For instance, the spool can have at least one fiber optic cable thereon. In other variations, the fiber optic cable may include a fiber optic connector attached thereto. In still further variations, the fiber optic connector may be a hardened connector suitable for use outdoors.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention and together with the description serve to explain the principals and operations of the invention.

### Brief Description of the Drawings

Fig. 1 is a perspective view of an explanatory fiber optic assembly according to one embodiment.

Fig. 2 depicts the fiber optic assembly of Fig. 1 being installed using a lashing machine.

Fig. 3 depicts an explanatory lashing machine for installing the assembly of Fig. 1.

Fig. 4 is a perspective view of the spool of the fiber optic assembly of Fig. 1 with the fiber optic cable removed for clarity.

Fig. 5 is a view of a first side of the spool shown in Fig. 4.

Fig. 6 is a view of a second side of the spool shown in Fig. 4.

Fig. 7 is a perspective view showing a plurality of spools attached together with the fiber optic cable removed for clarity according to one embodiment.

Figs. 8a-8g are cross-sectional views of explanatory fiber optic cables suitable for use with fiber optic assemblies disclosed herein.

Fig. 9 is an exploded view of the explanatory hardened connector of Fig. 1 suitable for attaching to an end of the fiber optic cable.

Figs. 10a and 10b respectively are a perspective view and a sectional view of the shroud of Fig. 9.

Fig. 11 is a perspective view showing a typical fiber optic cable prepared for the process of securing the strength members of the fiber optic cable to a subassembly of the hardened connector of Fig. 9.

Fig. 12 is a perspective view of another spool that includes a fiber optic connector and/or a splitter attached thereto.

Fig. 13 is a perspective view of the other side of the spool of Fig. 12 along with a suitable mount.

Fig. 14 is a perspective view showing the spool of Fig. 12 attached to an enclosure.

Fig. 15 is a perspective view showing explanatory mating portions of the enclosure of Fig. 14.

Fig. 16 is a close-up perspective view showing the explanatory mating portions of Fig. 14.

### Detailed Description of Preferred Embodiments

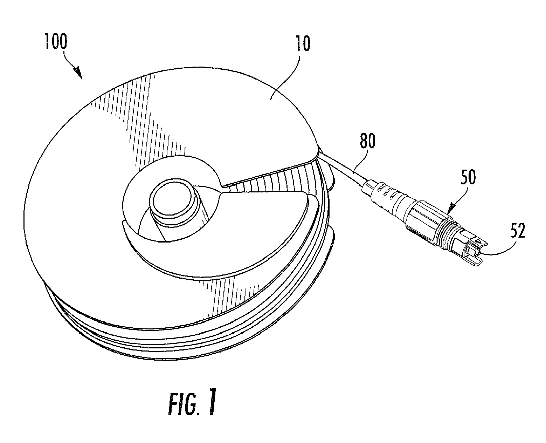

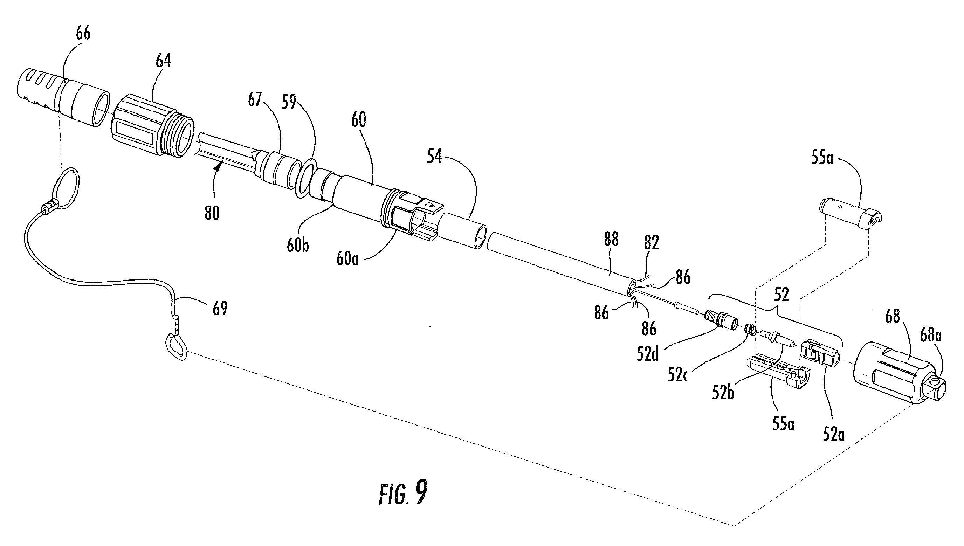

Reference will now be made in detail to the present preferred embodiments of the invention, examples of which are illustrated in the accompanying drawings. Whenever possible, the same reference numerals will be used throughout the drawings to refer to the same or like parts. Fig. 1 is a perspective view of an explanatory fiber optic assembly 100 according to the present invention. Fiber optic assembly 100 includes a spool 10 and a fiber optic cable 80, where at least a portion of fiber optic cable 80 is disposed on spool 10. Fiber optic cable 80 has a relatively small cross-section and is highly flexible so that it can be wrapped onto spool 10, while still being robust to preserve optical performance. Fiber optic assembly 100 may optionally include at least one fiber optic connector 52 attached to a first end of fiber optic cable 80. As best shown in Fig. 9, fiber optic assembly 100 employs fiber optic connector 52 as a portion of a hardened fiber optic plug 50, thereby providing a rugged connector for use in outdoor environments. Alternatively, fiber optic cable 80 may include a pulling grip (with or without a fiber optic connector) on the first end of fiber optic cable 80 for pulling the cable off spool 10 such as routing in an indoor applications. Furthermore, fiber optic assemblies can include other components such as a connector on a second end of the fiber optic cable, an optical splitter attached to the spool (or other portion of the assembly), and/or an optical connector attached to the spool.

Fiber optic assemblies are advantageous since they allow a relatively quick, easy, and reliable installation into optical networks such as fiber to the subscriber applications in indoor and/or outdoor applications. Moreover, the fiber optic assemblies allow on-demand installation into the optical network, thereby allowing the carrier to defer capital expenditures and labor costs until connection is desired. Furthermore, the fiber optic assembly provides slack storage for any unneeded length of fiber optic cable by remaining on the spool.

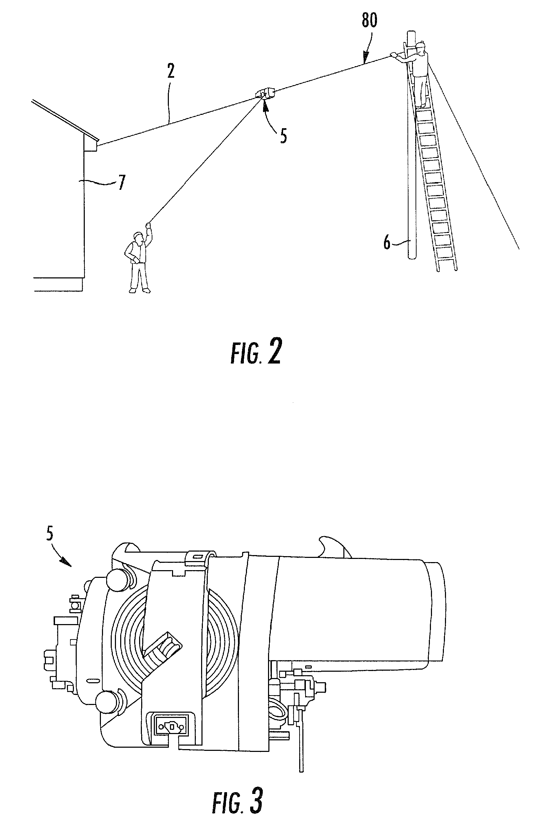

Figs. 2 and 3 illustrate the use of fiber optic assembly 100 with a lashing machine 5. Specifically, Fig. 2 depicts a fiber optic cable 80 being installed with lashing machine 5 onto an existing wire 2 for routing fiber towards the subscriber. Existing wire 2 advantageously provides the necessary support for potential wind and ice loading that fiber optic cable 80 may experience. Unlike conventional methods for lashing fiber optic cable to another cable or wire requiring a lashing element, methods of this disclosure do not require a lashing element. Simply stated, fiber optic cable 80 is wrapped about wire 2 for attaching the same to wire 2, instead of the fiber optic cable having a parallel lay to wire 2 which requires a lashing element for holding the fiber optic cable to the wire. Fig. 3 depicts an exemplary lashing machine 5. Lashing machine 5 secures cables to an existing wire, cable, or the like by wrapping the cable therearound as the lashing machine is pulled along the existing wire, without the use of a lashing element. Fig. 2 depicts lashing machine 5 attached to existing wire 2 and being pulled along the same by the craftsman on the ground for installing fiber optic cable 80 between a pole 6 and a subscriber's premises 7 as the fiber optic cable 80 is being removed from fiber optic assembly 100.

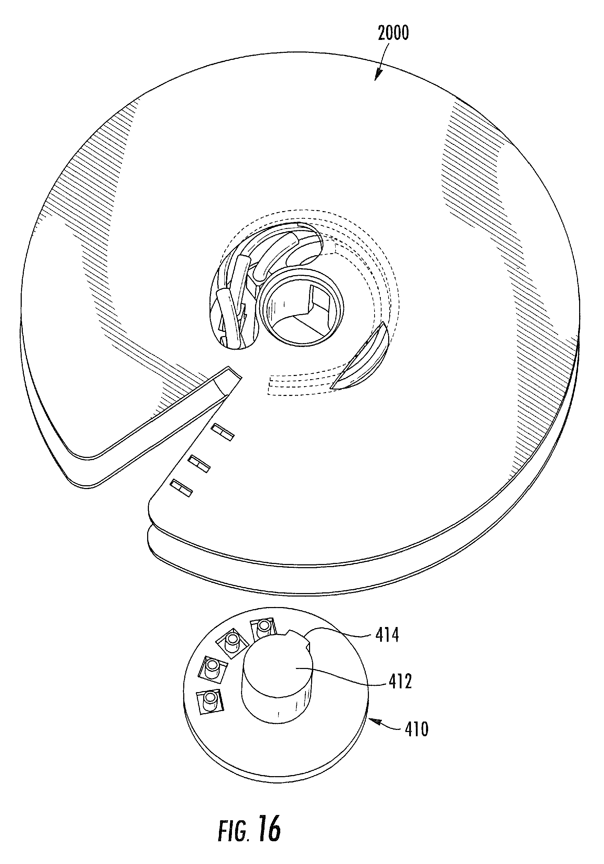

By way of explanation, fiber optic plug 50 of the fiber optic assembly is attached to a complementary receptacle (not visible) for optical connection with the existing optical network. For instance, the complementary receptacle can be a portion of a multi-port of receptacles, a closure, distribution cable, tether cable, etc. that is disposed on or near pole 6. Thereafter, lashing machine 5 is pulled along the existing wire 2 towards the subscriber's premises 7, thereby installing the fiber optic cable on existing wire 2. Then the fiber optic assembly is removed from lashing machine 5 and routed to its desired location at the subscriber's premises 7 with any excess cable length remaining on spool 10. By way of example, the fiber optic assembly may be routed to an enclosure such as a network interface device (NID) or other suitable hardware, interface, demarcation point, or the like for an optical connection directed toward the subscriber. Illustratively, Fig. 16 depicts an explanatory spool as discussed in more detail below. Other applications include placing the fiber optic assembly onto a spindle and pulling the required length of cable off the assembly and then securing the assembly at the desired location.

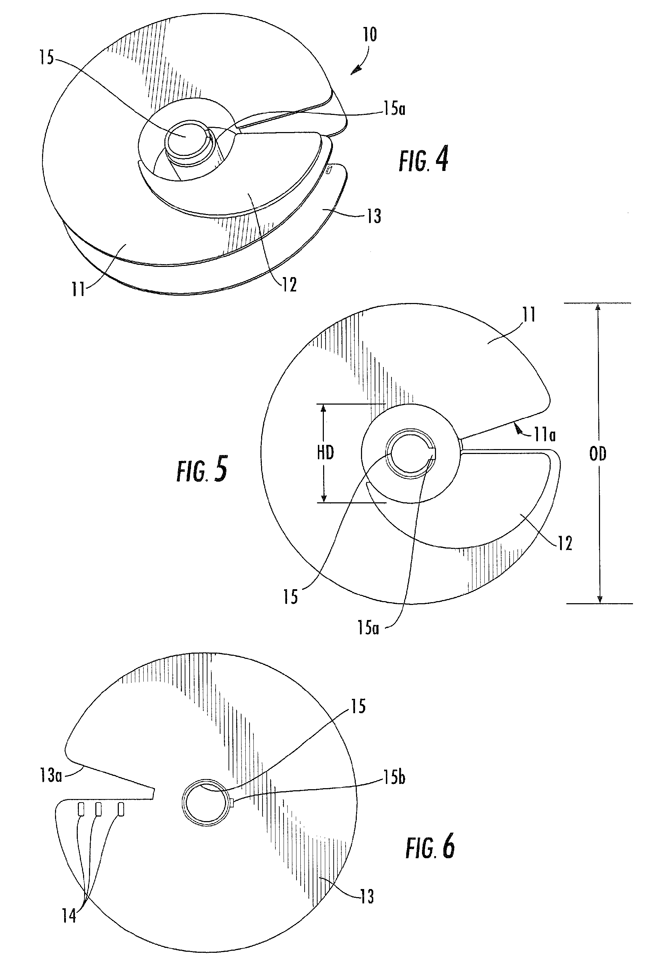

Figs. 4-6 depict spool 10 of the fiber optic assembly 100 shown in Fig. 1 to illustrate the details of the same. Specifically, Fig. 4 is a perspective view of spool 10, while Figs. 5 and 6 show respective side views of spool 10. Generally speaking, spool 10 has an outer diameter OD that is relatively small while still being able to hold a relatively long length of fiber optic cable. Moreover, spool 10 has a minimum hub diameter HD that is matched to a safe minimum bend diameter for the fiber optic cable design being used on the spool. By way of example, spool 10 has an outer diameter OD of about 20 centimeters or less and hub diameter HD of about 4 centimeters, but other suitable diameters for the spool are possible. Spool 10 includes a first flange 11, a second flange 13, and a hub 15. First flange 11 and second flange 13 allow for the winding and/or storing of a portion of fiber optic cable 80 between the flanges. Any suitable width (not numbered) such as 5 centimeters or less between first flange 11 and second flange 13 is possible to the extent that it can be accommodated by the choosen lasher 5. Further, spools having larger widths between flanges will have capacity for longer lengths of fiber optic cable. Second flange 13 also includes a marking indicia 14 for indicating the length of fiber optic cable wound on spool 10. By way of example, if fiber optic cable is wound to the first radially inward marking indicia it indicates about 50 meters of fiber optic cable is on spool 10, if the second marking indicia is reached about 100 meters of fiber optic cable is on spool 10, and if the third marking indicia is reached about 150 meters of fiber optic cable is on spool 10.

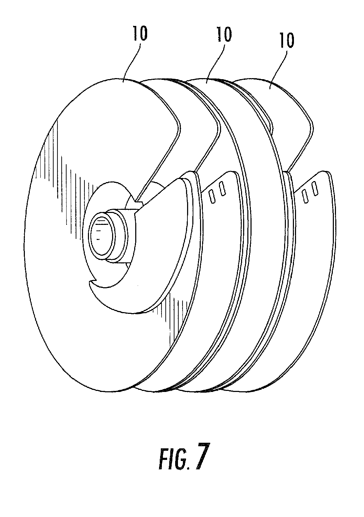

Spool 10 also includes features for ganging together a plurality of spools so that longer lengths of fiber optic cable can be used and continuously wound off the fiber optic assembly. For instance, if one spool can hold up to 300 meters of fiber optic cable, then three spools ganged together can hold up to 900 meters of fiber optic cable. Consequently, fiber optic assemblies are suitable for applications requiring relatively long deployments to reach the subscriber. As shown, spool 10 includes a first keyed portion 15a and a second keyed portion 15b on hub 15 for arranging a predetermined orientation during mating of the spool with another component such as another spool, but either keyed portion 15a can cooperate with other components like a mount within an enclosure or the like, thereby creating a predetermined orientation. As shown, first keyed portion 15a is disposed about 180 degrees apart from second keyed portion 15b, but other orientations are possible. Consequently, when two or more spools 10 are ganged together the keyed portions on respective spools keep adjacent spools about 180 degrees out of phase. Fig. 7 depicts a perspective view showing a plurality of spools attached together (without a fiber optic cable thereon for clarity) with adjacent spools 10 being about 180 degrees out of phase. In other words, the first keyed portion on the hub of a first spool engages the second keyed portion on the hub of the second spool, thereby aligning the spools about 180 degrees out of phase for allowing the transition of the fiber optic cable between adjacent spools.

Specifically, spool 10 also includes a notch 11a on first flange 11 and a notch 13a on second flange 13, thereby allowing the fiber optic cable to transition on and/or off the spool with ease. The opening provided by notch 11a overlaps with the opening provided by notch 13a over a predetermined angle. More specifically, notch 11a and notch 13a are generally aligned on the flanges as shown (i.e., the notches are disposed in about the same location on each flange). Additionally, spool 10 also includes a curved protrusion 12 (e.g. a nautilus-type shape) attached to first flange 11 for allowing the transition (i.e., unreeling) of the fiber optic cable from the assembly when spools are ganged together. In other words, curved protrusion 12 aids the transition from a radially outward portion of a full spool to an inwardly portion of an empty spool. As best shown in Fig. 5, the radial dimension of curved protrusion 12 increases from a minimum radial dimension farthest away from notch 11a to a maximum radial dimension closest to notch 11a. Thus, in use the fiber optic cable transitions from the radial dimension of a full spool to a radial dimension of an empty spool in about 180 degrees by wrapping the fiber optic cable onto curved protrusion 12 in between spools and entering the empty spool through the notch in the flange.

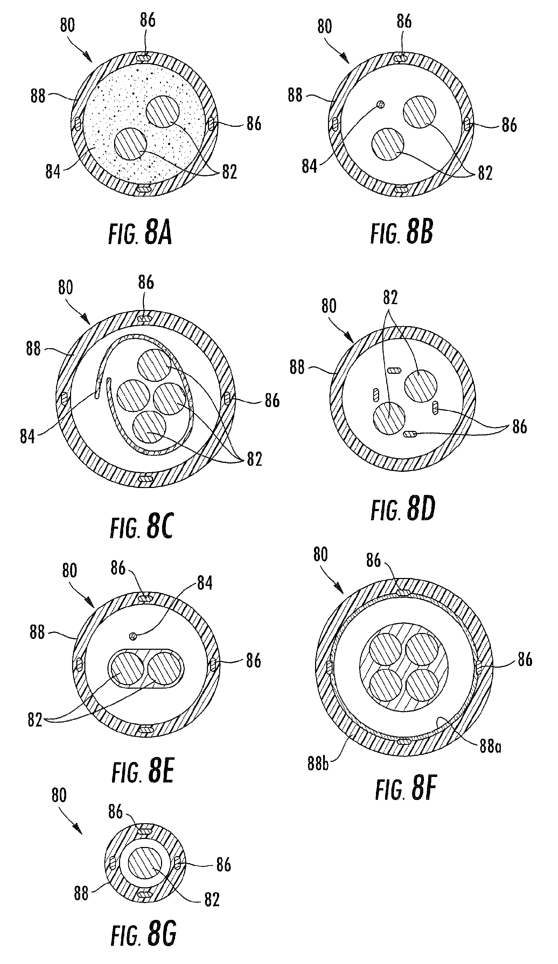

Unlike the conventional installation solutions where the fiber optic cable is stiff, fiber optic cables used in assemblies disclosed are highly flexible for winding onto the spool. Moreover, the fiber optic assemblies use the existing wire, cable, or the like for aerial support so the GRP rods are not necessary like conventional installations. Consequently, the fiber optic cables used have a relatively small outer diameter such as 2 millimeters or less, thereby allowing a relatively small safe minimum bend diameter such as in the range of about 3-4 centimeters, but other cable diameters and/or minimum bend diameters are possible. Additionally, the relatively small outer diameter for fiber optic cables used in the fiber optic assembly allows for long lengths of cable on the spool. Figs. 8a-8g are cross-sectional views of a plurality of explanatory fiber optic cables 80 suitable for use with fiber optic assemblies disclosed herein.

Fig. 8a depicts a fiber optic cable 80 having one or more optical fibers 82, a water-blocking and/or water-swellable component 84, one or more strength members 86, and a cable jacket 88. If used for indoor/outdoor applications, fiber optic cables may include water-blocking features and may include a flame-retardant rating or characteristic. Optical fiber 82 is shown as a loose optical fiber in Fig. 8a to maintain a relatively small outer diameter for fiber optic cable 80, but other configurations for optical fibers 82 are possible such as a ribbon or optical fiber bundle. Moreover, any suitable type of optical fiber is possible so long as optical performance is preserved; however, it may be advantageous to use a bend-insensitive optical fiber such as ClearCurve™ optical fiber available from Coming, Incorporated of New York. Illustratively, Fig. 8e depicts optical fibers 82 in a two-fiber ribbon (not numbered) disposed within cable jacket 88. Fig. 8f depicts optical fibers 82 configured as an optical bundle (i.e., four-fibers held together with a common matrix material). Moreover, any suitable type of optical fiber may be used such as single-mode, multi-mode, bend insensitive, etc..

Fiber optic cable 80 of Fig. 8a uses a water-swellable powder for inhibiting the migration of water within the fiber optic cable. But, other suitable forms for water-swellable component 84 are possible for fiber optic cable 80. For instance, water-swellable component 84 of Fig. 8b is a water-swellable yarn, a water-swellable tape is shown in Fig. 8c, and a water-swellable strength member 86 is used as the water-swellable component in Fig. 8d. Additionally, water-swellable component 84 may aid in inhibiting optical fiber 82 from sticking to cable jacket 88 such as shown in Fig. 8c. Optionally, fiber optic cable 80 can include other components such as talc powder or the like for inhibiting the sticking of optical fiber 82 to cable jacket 88. Other embodiments may use more than one water-swellable component such as a yarn and a tape for water-blocking and/or inhibiting sticking of optical fiber 82 to cable jacket 88.

Strength member 86 is a yarn, roving, or the like that is highly flexible, thereby providing tensile strength for fiber optic cable 80. For instance, each strength member 86 could be an aramid yarn, roving or the like having a given denier such as about 1000, but other materials and/or denier values are possible. For instance, strength member 86 could be fiberglass with a 1200 denier per strand. Figs. 8a-8c depict strength members 86 attached to cable jacket 88 with a relatively uniform spacing. Moreover, strength members 86 can include a coating such as EAA for promoting adhesion with cable jacket 88. Fig. 8d depicts fiber optic cable 80 where strength member 86 is disposed loosely within cable jacket 88. Specifically, strength member 86 of Fig. 8d is multi-functional since it provides both tensile strength and includes a water-swellable feature for inhibiting the migration of water along the fiber optic cable. Strength members 86 can have other suitable configurations within cable jacket 88.

Cable jacket 88 is formed from one or more suitable polymeric materials such as a polypropylene (PP) or polyethylene (PE), but other polymeric materials are possible as know in the art. Cable jacket has a suitable wall thickness such as about 0.2 millimeters, thereby allowing a small diameter cable with the necessary strength. As depicted in Fig. 8f, cable jacket 88 can include more than one material and/or layer. Fig. 8f shows cable jacket 88 including an inner low-friction layer 88a formed of glass beads and a polymer outer layer 88b. Using an inner layer with a lower coefficient of friction allows the optical fiber, ribbon, bundle or the like to easily move with cable jacket 88. Likewise, using a water-swellable powder for the water-swellable component is also advantageous for lowering the coefficient of friction since the particles of water-swellable powder act like small ball bearings to reduce friction. Fig. 8G depicts a single-fiber version of fiber optic cable 80. Other variations for cable jacket 88 are possible like flame-retardant ratings and/or characteristics.

Fig. 9 is an exploded view of a portion of the fiber optic assembly of Fig. 1 (i.e., a portion of fiber optic cable 80 and fiber optic connector 52). Fiber optic connector 52 can be any suitable type of optical connector such as a SC, FC, ST, LC, MT, MTP, MPO or any other suitable connector. Furthermore, fiber optic connector 52 can be a portion of a fiber optic plug that is hardened, thereby making it suitable for outdoor applications. In this embodiment, plug connector 50 includes an industry standard SC type connector assembly 52 having a connector body 52a, a ferrule 52b in a ferrule holder (not numbered), a spring 52c, and a spring push 52d. Plug connector 50 also includes a crimp assembly (not numbered) that includes a housing having at least one shell 55a and a crimp band 54, a shroud 60 having an O-ring 59, a coupling nut 64, a cable boot 66, a heat shrink tube 67, and a protective cap 68 secured to boot 66 by a lanyard 69. Additionally, the concepts of the present invention may be practiced with other suitable hardened connectors other than the explanatory example described herein. Non-limiting examples, include multifiber hardened connectors, hybrid hardened connectors (e.g., optical and electrical), and the like.

Generally speaking, most of the components of plug connector 50 are formed from a suitable polymer. Preferably, the polymer is a UV stabilized polymer such as ULTEM 2210 available from GE Plastics; however, other suitable materials are possible. For instance, stainless steel or any other suitable metal may be used for various components.

As best shown in Fig. 9, plug connector 50 includes the housing (not numbered) and crimp band 54. The housing has two shells 55a that are held together by crimp band 54 when the preconnectorized cable is assembled; however, other embodiments are possible that exclude crimp band 54 such as using an epoxy or heat shrink to secure the shells. Although, the term shell is used, it is to be understood that it means suitable shells that are greater than or less than half of the housing or can include more than two shells. Crimp band 54 is preferably made from brass, but other suitable crimpable materials may be used. The housing is configured for securing connector assembly 52 as well as providing strain relief for fiber optic cable 80. This advantageously results in a relatively compact connector arrangement using fewer components. Moreover, plug connector 50 allows quick, easy, and reliable assembly. Of course, other embodiments are possible. For instance, connector body 52a may be integrally molded into the housing in a ST type configuration so that a twisting motion of the housing secures the ST-type connector with a complementary mating receptacle.

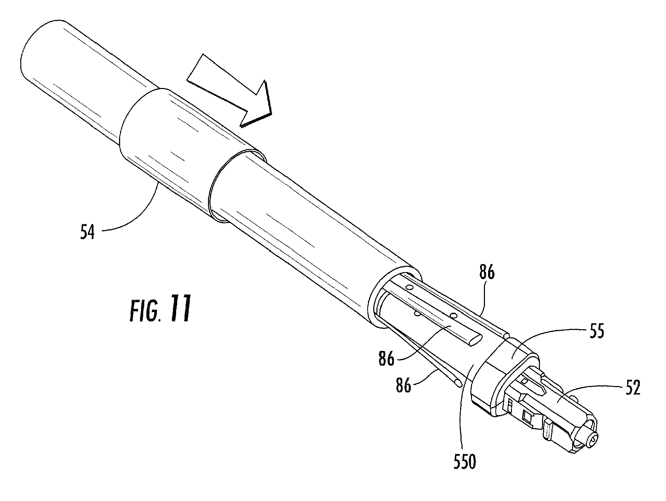

Fig. 9 also illustrates one method for preparing an end of fiber optic cable 80 for strain relief and connectorization. Specifically, cable jacket 88 is removed from an end portion of the fiber optic cable leaving strength members 86 and optical fiber 82 exposed. Other process variations such as leaving a portion of cable jacket 88 attached to strength members 86 are possible for providing strain relief. As best shown in Fig. 11, shells 55a are suitable for attaching strength members between the outer barrel of the housing formed by the shells and the crimp band or by securing the strength members between the shells. Shells 55a are depicted as being symmetrical with complementary alignment pins and bores (not numbered) for ensuring proper assembly. Of course, other embodiments may have a first shell and a second shell which are not symmetrical. For instance, one -shell may have two alignment pins and the other shell has both complementary bores for receiving the alignment pins, rather than each shell having a single alignment pin and bore.

As depicted, shells 55a includes a first end (not numbered) for securing connector assembly 52 and a second end (not numbered) that provides strain relief. A longitudinal axis is formed between the first end and the second end near the center of the housing, through which half of a longitudinal passage is formed. When assembled, optical fiber 82 passes through the longitudinal passage and is held in a bore of ferrule 52b. Additionally, shells 55a includes a connector assembly clamping portion (not numbered) for securing a portion of connector assembly 52.

Connector assembly clamping portion is sized for securing connector assembly 52. Specifically, connector assembly clamping portion has a half-pipe passageway (not numbered) that opens into and connects central half-pipe passageway (not numbered) and a partially rectangular passageway (not numbered). The half-pipe passageway is sized for securing spring push 52d and may include one or more ribs for that purpose. The rectangular passageway (near the first end) holds a portion of connector body 52a therein and inhibits the rotation between connector assembly 52 and the housing. Additionally, the shells 55a may include one or more bores (not numbered) that lead to one of half-pipe passageways. The bores allow injecting of an adhesive or epoxy into the housing if strength members are held between the shells, thereby providing a secure connection for strain relief.

As shown in Fig. 11, strength members 86 of cable 80 are secured to plug connector 50 by being captured between an outer barrel (not numbered) of housing 55 and the inner diameter of crimp band 54 during crimping. Specifically, Fig. 11 shows fiber optic cable 80 prepared for securing the same to plug connector 50 by placing strength members 86 between outer barrel and then sliding the crimp band 54 over the same as depicted by the arrow. Thereafter, an appropriate tool is used for securing crimp band 54 to housing 55. Of course other techniques are possible for securing strength members 86, but using this technique allows one configuration of housing 55 to accommodate several different types of cables and/or securement configurations.

When fully assembled the assembly fits into shroud 60. Additionally, the housing is keyed to direct the insertion of the assembly into shroud 60. For instance, shells 55a include planar surfaces (not numbered) near the first end disposed on opposites sides of the housing (e.g., the assembly) for inhibiting relative rotation between the housing 55 and shroud 60. In other embodiments, the assembly may be keyed to the shroud using other configurations such as a complementary protrusion/groove or the like.

Shroud 60 has a generally cylindrical shape with a first end 60a and a second end 60b. Shroud generally protects connector assembly 52 and in preferred embodiments also keys plug connector 50 with the respective mating receptacle (not shown). Moreover, shroud 60 includes a through passageway between first and second ends 60a and 60b. As discussed, the passageway of shroud 60 is keyed so that crimp housing is inhibited from rotating when plug connector 50 is assembled. Additionally, the passageway has an internal shoulder (not numbered) that inhibits the crimp assembly from being inserted beyond a predetermined position.

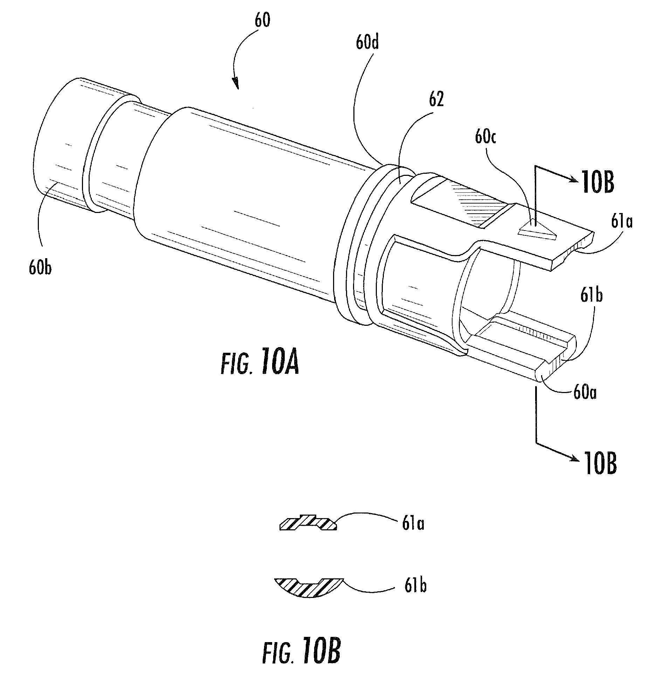

As best shown in Figs. 10a and 10b, first end 60a of shroud 60 includes at least one opening (not numbered) defined by shroud 60. The at least one opening extends from a medial portion of shroud 60 to first end 60a. In this case, shroud 60 includes a pair of openings on opposite sides of first end 60a, thereby defining alignment portions or fingers 61a,61b. In addition to aligning shroud 60 with receptacle during mating, alignment fingers 61a,61b may extend slightly beyond connector assembly 52, thereby protecting the same. As shown in Fig. 10b, alignment fingers 61a,61b optionally have different shapes (i.e., different cross-section shapes) so plug connector 50 and the complementary receptacle can only mate in one orientation. As shown, this orientation is marked on shroud 60 using alignment indicia 60c so that the craftsman can quickly and easily mate the preconnectorized fiber optic cable with the receptacle. In this case, alignment indicia 60c is an arrow molded into the top alignment finger of shroud 60, however, other suitable indicia may be used. To make an optical connection, the arrow is aligned with complimentary alignment indicia disposed on the receptacle so that alignment fingers 61a,61b can be seated into the receptacle. Thereafter, the craftsman engages the external threads of coupling nut 64 with the complimentary internal threads of the receptacle to secure the optical connection.

A medial portion of shroud 60 has one or more grooves 62 for seating one or more O-rings 59. O-ring 59 provides a weatherproof seal between plug connector 50 and receptacle 30 or protective cap 68. The medial portion also includes a shoulder 60d that provides a stop for coupling nut 64. Coupling nut 64 has a passageway sized so that it fits over the second end 60b of shroud 60 and easily rotates about the medial portion of shroud 60. In other words, coupling nut 64 cannot move beyond shoulder 60d, but coupling nut 64 is able to rotate with respect to shroud 60. Second end 60b of shroud 60 includes a stepped down portion having a relatively wide groove (not numbered). This stepped down portion and groove are used for securing heat shrink tubing 67. Heat shrink tubing 67 is used for weatherproofing the preconnectorized fiber optic cable. Specifically, the stepped down portion and groove allow for the attachment of heat shrink tubing 67 to the second end 60b of shroud 60. The other end of heat shrink tubing 67 is attached to cable jacket 88, thereby inhibiting water from entering plug connector 50.

After the heat shrink tubing 67 is attached, boot 66 is slid over heat shrink tubing 67 and a portion of shroud 60. Boot 66 is preferably formed from a flexible material such as KRAYTON. Heat shrink tubing 67 and boot 66 generally inhibit kinking and provide bending strain relief to the cable near plug connector 50. Boot 66 has a longitudinal passageway (not visible) with a stepped profile therethrough. The first end of the boot passageway is sized to fit over the second end of shroud 60 and heat shrink tubing 67. The first end of the boot passageway has a stepped down portion sized for cable 80 and the heat shrink tubing 67 and acts as stop for indicating that the boot is fully seated. After boot 66 is seated, coupling nut 64 is slid up to shoulder 60c so that lanyard 69 can be secured to boot 66. Specifically, a first end of lanyard 69 is positioned about a groove (not numbered) on boot 66. Thus, coupling nut 64 is captured between shoulder 60c of shroud 60 and lanyard 69 on boot 66. This advantageously keeps coupling nut 64 in place by preventing it from sliding past the lanyard 69 down onto cable 80.

A second end of lanyard 69 is secured to protective cap 68. Consequently, protective cap 68 is prevented from being lost or separated from preconnectorized cable 10. In this embodiment, lanyard 69 is attached to protective cap 68 at an eyelet 68a, but other attachment arrangements are possible. Eyelet 68a is also useful for attaching a fish-tape so that the preconnectorized cable can be pulled off of the spool and into a duct. Protective cap 68 has internal threads for engaging the external threads of coupling nut 64. Moreover, O-ring 59 provides a weatherproof seal between plug connector 50 and protective cap 68 when installed. When threadly engaged, protective cap 68 and coupling nut 64 may rotate with respect to the remainder of preconectorized fiber optic cable thus inhibiting torsional forces during pulling.

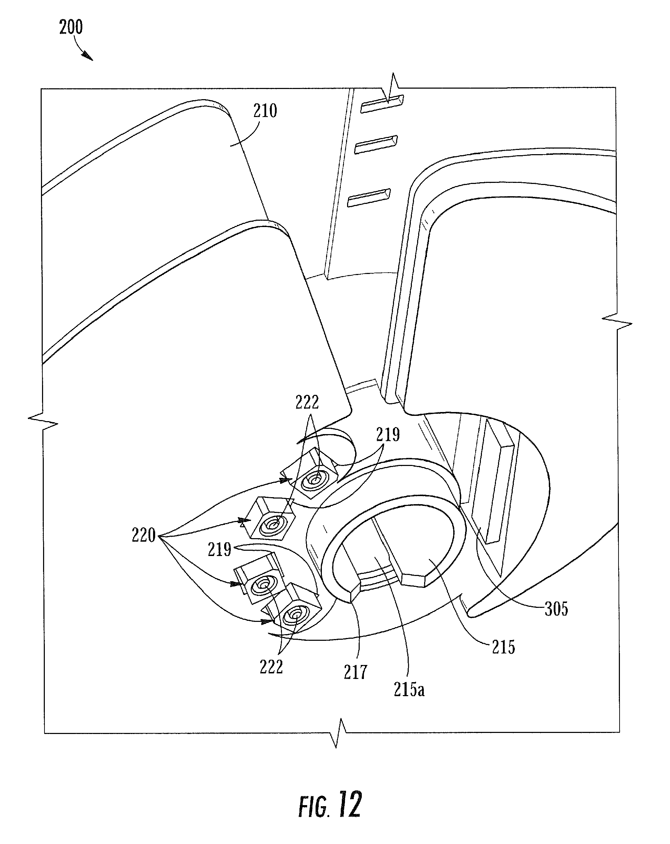

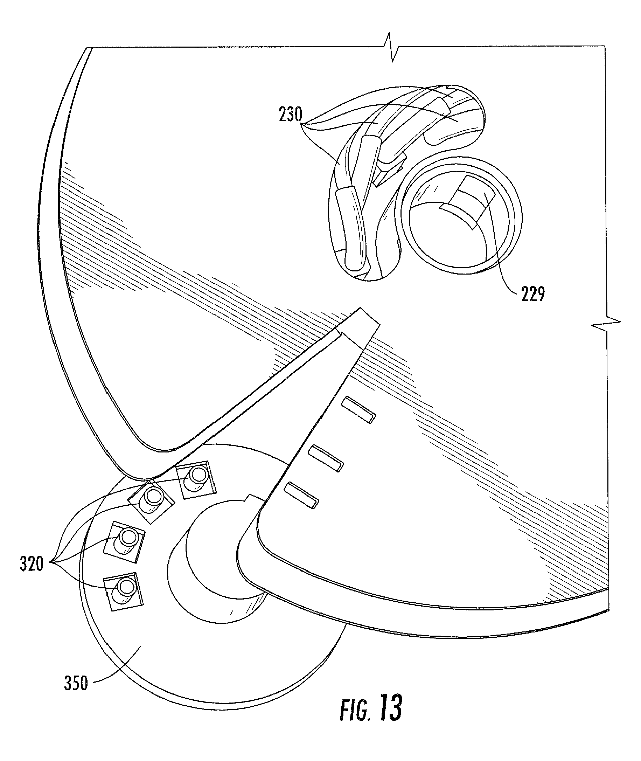

Fiber optic assemblies can also include other components and/or configurations for optical connectivity. By way of example, Figs. 12 and 13 are perspective views of a fiber optic assembly 200 having a spool 210 that is similar to spool 10 of Fig. 4, but spool 210 further includes one or more attachment locations 219 for a fiber optic connector 220 to attach thereto. Fiber optic connectors 220 include a connector body (not numbered) and a ferrule 222 and is suitable for mating with another suitable fiber optic connector disposed in an adapter sleeve or the like such as adapter sleeve 320 of Fig. 13. As shown, fiber optic connector 220 is orientated so that ferrule 222 is directed away from the flange of spool 210, thereby allowing optical mating with another fiber optic connector when fiber optic assembly 200 is suitably attached. In this embodiment, one or more adapter sleeves 320 are attached to a mount 350 for spool 210 Thus, fiber optic connectors 220 make an optical connection when the fiber optic assembly is attached to mount 350 or other similar structure. By way of example, a mount could be included in a closure, network interface device (NID), or other suitable enclosures or hardware. As best depicted in Fig. 13, fiber optic connectors 220 are attached to a first end of the fiber optic cable 230 (i.e., the optical fibers of fiber optic cable 230), which is disposed on spool 210. In other words, fiber optic connector 220 is preconnectorized on one or more legs of the first end of fiber optic cable 230 and is attached to spool 210 before the cable is wound thereon. Any suitable type of push-pull fiber optic connector may be used as the fiber optic connector such as SC, LC, MT, MT-RJ, or the like. The fiber optic connector is typically suited for protected environments such as within an enclosure (i.e., a network interface device) as discussed below, but the fiber optic connectors may be constructed and/or protected for outdoor applications. For instance, the second end of fiber optic cable 230 may include a fiber optic plug 50 like shown in Fig. 9 for optical connectivity in outdoor environments such as at a pole.

Spool 210 includes a hub 215 with a keyed portion 215a for aligning the same on a suitable mount so that the fiber optic connectors 220 align with an adapter sleeve or the like, thereby allowing an optical connection for transmitting optical signals. Hub 215 also includes a lead-in feature 217 such as chamfers for aligning the assembly in the right position. Additionally, spool 210 may include a latching feature for securing the fiber optic assembly/spool on the mount, thereby maintaining the position/optical connection for fiber optic connector 220. In this embodiment, latching feature 229 (Fig. 13) is a resilient finger that has a leading edge profile that deflects the resilient finger when mounting the fiber optic assembly onto the mount and secures the same when fully engaged on the mount, thereby inhibiting unintentional removal/repositioning of the fiber optic assembly from the mount. If removal of the fiber optic assembly from the mount is desired, the resilient finger can be deflected so that the engagement is released and removal of the fiber optic assembly from the mount is possible.

Although, keyed portion 215a is depicted as a straight keyway with the fiber optic connectors disposed generally inline with a hub centerline other configurations for the keyed portion 215a are possible. For instance, the keyed portion could have a helical orientation with respect to the hub centerline so that the fiber optic assembly rotates as it mounted. Additionally, the fiber optic connectors would be attached to the spool at a complementary angle so that as the fiber optic assembly rotated the fiber optic connectors mate with the adapter sleeve or complementary fiber optic connectors.

Additionally, fiber optic assemblies may further include a splitter 305 with or without fiber optic connectors 220 as shown in Fig. 12. Splitter 305 is disposed on a wall of spool 210 as shown or it can be disposed in other suitable locations. Splitter 305 splits the optical path of the optical fiber into multiple optical paths. In other words, the optical fiber of the fiber optic cable is attached to a first portion of splitter 305 and the path is split so that multiple optical fibers such as a plurality of pigtails 230 having respective fiber optic connectors 220 on the end exit a second portion of splitter 305. In this embodiment, splitter 305 is a 1X4 splitter that splits the incoming optical signal into four optical paths for the respective fiber optic connectors 220; however, other suitable splitter ratios are possible such as a 1x2, 1x8, or the like. Spool 210 has a plurality of attachment locations 219 for attaching each of the fiber optic connectors 220 thereto.

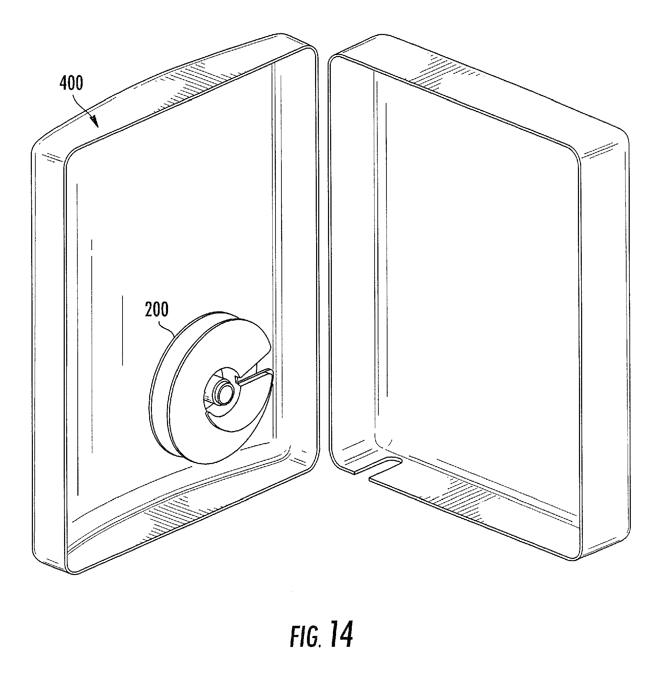

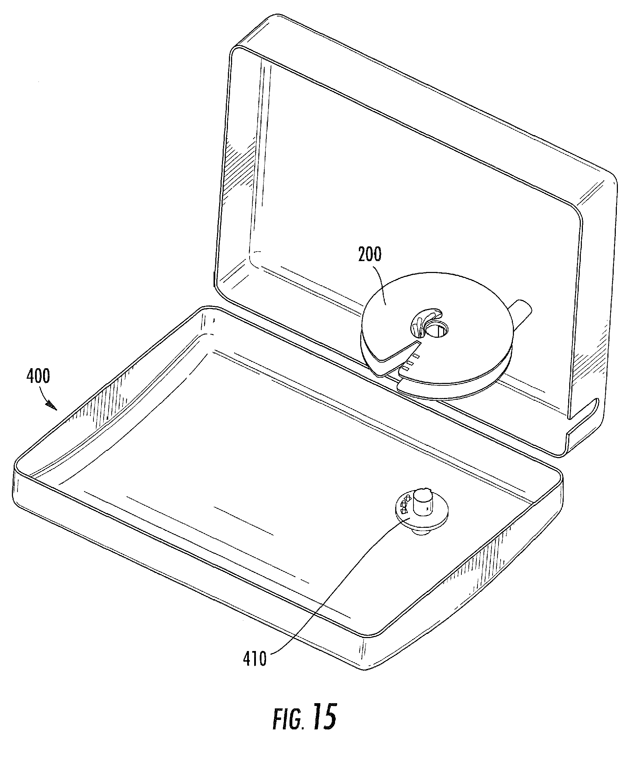

Fig. 14 is a perspective view showing a generic enclosure 400 having one or more suitable mounts 410 similar to mount 350 for optically connecting fiber optic assembly 200 as discussed above. As best shown by the partially exploded view of Fig. 15, mount 410 may be positioned at any suitable location on the enclosure. Fig. 16 is a close-up perspective view showing explanatory mating portions of the fiber optic assembly of Fig. 12 and the network interface device of Fig. 14. As depicted, mount 410 includes a mounting post 412 having a keyed portion 414 for aligning fiber optic assembly 300 thereto. It is possible to integrate mount 410 as part of the enclosure 400 or have it as a separate component. Either way the mount should have a sufficient offset spacing to permit installation of the adapter and optical connector from the backside. Also, the fiber optic connectors 220 may include boots that bend such as at 45 degrees or more such as 90 degrees to aid with clearance of the boot/fiber optic cable.

Other variations to the spools and assemblies disclosed herein are also possible. For instance, one or more flanges may be detachable from the spool so that the fiber optic cable may be removed from the spool for alternate slack storage methods, other than remaining on the spool. In another variation, the spool can collapse so that alternative slack storage methods can be employed, thereby minimizing residual installed and/or temperature cycling induced stress. Additionally, spools can be adapted for using multi-fiber connectors and the like.

Many modifications and other embodiments of the present invention, within the scope of the claims will be apparent to those skilled in the art. For instance, the concepts of the present invention can be used with any suitable fiber optic cable design and/or method of manufacture. For instance, the embodiments shown can include other suitable assembly components such as a plurality of connectors on the fiber optic cable, clips for attachment, different cross-sectional shapes, or the like. Thus, it is intended that this invention covers these modifications and embodiments as well those also apparent to those skilled in the art to the extend as they are covered by the claims including their equivalents.

## Claims

1. A fiber optic assembly comprising:
at least one fiber optic cable;
at least one fiber optic connector, and
a spool, the spool having at least a portion of the fiber optic cable thereon and the spool further includes the fiber optic connector attached thereto.

2. The fiber optic assembly of claim 1, wherein the spool further includes a first spool flange and a second spool flange, the first spool flange includes a notch and the second spool flange includes a notch, wherein the notch of the first flange overlaps with the notch of the second flange.

3. The fiber optic assembly of claim 1, wherein the spool further includes a first spool flange and a second spool flange, the first spool flange further includes a curved protrusion portion for allowing the unreeling of the at least one fiber optic cable when multiple spools are attached together.

4. The fiber optic assembly of any of claims 1 to 3, the spool further including a hub, wherein a portion of the hub extends beyond the first spool flange.

5. The fiber optic assembly of any of claims 1 to 3, the spool further including a hub, wherein the hub has a keyed portion for arranging a predetermined orientation during mating of the spool with another component.

6. The fiber optic assembly of any of claims 1 to 5, the assembly further including a second spool, wherein the spools are attached together in a removable manner.

7. The fiber optic assembly of any of claims 1 to 6, the assembly being attached to an enclosure.

8. The fiber optic assembly of of any of claims 1 to 7, the assembly further includes a fiber optic splitter.

9. The fiber optic assembly of any of claims 1 to 8, the spool having an outer diameter of about 20 centimeters or less.

10. The fiber optic assembly of any of claims 1 to 9, the at least one fiber optic cable having a fiber optic plug attached thereto, the fiber optic plug having a keyed shroud for mating with a complementary receptacle.

11. The fiber optic assembly of claim 1,
the fiber optic cable having at least one optical fiber, a water-swellable component, and a cable jacket;
the at least one fiber optic connector being attached to the at least one fiber optic cable, and
the spool having a first spool flange and a second spool flange and the portion of the fiber optic cable being disposed on the spool between the first spool flange and the second spool flange, wherein the spool has a diameter of about 20 centimeters or less.

12. The fiber optic assembly of claim 11, the first spool flange includes a notch and the second spool flange includes a notch, wherein the notch of the first flange overlaps with the notch of the second flange.

13. The fiber optic assembly of claim 11, the first spool flange further includes a curved protrusion portion for allowing the unreeling of the at least one fiber optic cable when multiple spools are attached together.

14. The fiber optic assembly of any of claims 11 to 13, the spool further including a hub, wherein a portion of the hub extends beyond the first spool flange.

15. A method of installing a fiber optic cable, comprising the steps of:
providing a fiber optic assembly comprising at least one fiber optic cable according to any of claims 1 to 14; and
wrapping the at least one fiber optic cable about a wire for securing the at least one fiber optic cable to the wire without the use of a lashing element.
